# DEMANDE DE BREVET EUROPEEN

(11) **EP 3 671 436 A1**
(43) Date de publication de la demande: **24.06.2020**
(21) Numéro de dépôt: 19218367.1
(22) Date de dépôt: 19.12.2019
(51) Int. Cl.: G06F 8/60, H04L 12/70

(54) **RÉSEAU DE NOEUDS INTELLIGENTS POUR RÉSEAU DISTRIBUÉ SELON UN MAILLAGE ADAPTABLE AUX APPLICATIONS INDUSTRIELLES OU DE SERVICES**

(30) Priorité: 20.12.2018 FR 1873678
(71) Demandeur: Atos Worldgrid, 95870 Bezons (FR)
(72) Inventeur: BOUZON, Lionel, 38830 St Pierre d'Allevard (FR); DEBROUX, Lionel, 38590 St Etienne de Sainte Geoirs (FR); EYNARD, Charles, 69003 Lyon (FR); VOISIN, Christophe, 38700 Le Sappey en Chartreuse (FR); DIMITRIOU, Vincent, 38560 Champ-sur-Drac (FR)
(74) Mandataire: Debay, Damien

(57) **Abrégé**

La présente invention concerne un réseau de Nœuds intelligents pour réseau distribué selon un maillage adaptable aux applications industrielles, chaque nœud permettant, par le biais d'un middleware de communication GCOM, une communication bidirectionnelle de proche en proche avec d'autres nœuds ou une plateforme centrale de gestion de données de masse (Big Data Management) permettant l'acquisition, la gestion et la mémorisation d'un lac de données ou avec un nuage public ou privé, chaque nœud comportant une architecture matérielle informatique, ladite architecture fonctionnant sous un système d'exploitation et une pile logicielle utilisant un langage orienté objet, le réseau étant caractérisé en ce qu' un ou plusieurs nœuds sont déployés à des niveaux d'agrégation différents dont au moins un hors site usine, au moins un près des automates procédés de l'usine, au moins un dans la salle de conduite et au moins un par nuage, l'exécution de ladite pile logicielle sur l'architecture matérielle informatique met en œuvre un ensemble de fonctionnalités, la communication interne au maillage et externe vers d'autres systèmes étant orientée message.

## Description

### DOMAINE TECHNIQUE DE L'INVENTION

La présente invention concerne le domaine de conduite des processus industriels ou de service dans un environnement sécurisé, complètement distribué.

### ETAT DE LA TECHNIQUE ANTERIEURE

De nos jours la donnée transite de façon très intense principalement dans des domaines comme le machine learning où elle est considérée comme la matière première.

Ainsi il est très bénéfique et même vital de partager sa donnée afin de la confronter aux meilleures techniques d'apprentissage. Cependant ce partage est facteur de risque. En effet plusieurs questions sont soulevées par ce partage dont la sécurisation, l'évolutivité. Par conséquent, comment échanger des données sur un processus industriel et échanger des données sur les produits dérivés découlant de la donnée initiale (modèle de Machine Learning, enrichissement de données personnelles, ...).

Une solution connue des systèmes classiques de supervision industrielle est SCADA, qui pour sa part, est architecturé uniquement pour remonter de la donnée industrielle sans déployer d'intelligence à l'extrémité du réseau. Dans un système de supervision classique (SCADA), les équipements (RTUs) sont configurés statiquement et leur fonction première est d'exposer de la donnée. En outre, les marquages préexistant ne se transmettent pas au résultat dérivé tel que des transformations de la donnée, des constructions de modèle, découlant de données déjà partagées. En d'autres termes, le marquage s'arrête après le partage de la donnée et ne se diffuse pas aux produits dérivés de cette donnée. Il n'est donc pas transitif ou héréditaire.

Ainsi le document : GOOSE S ET AL « SKYDA: Cloud-based, secure SCADA-as-a-service», INTERNATIONAL TRANSACTIONS ON ELECTRICAL ENERGY SYSTEMS, vol. 25, no. 11, novembre 2015 (2015-011), pages 3004-3016, XP009192722, ISSN:2050-7038, DOI: doi:10.1002/etep.2018, ci-après nommé D1, constitue un art antérieur de ce type.

Bien que D1 enseigne un système de supervision de type SCADA ce système est limité à la gestion sécurisée de réseaux électriques intelligents (smartgrid) et n'est pas utilisable pour tous processus.

En effet, l'architecture (SKYDA), du système de supervision SCADA, décrite dans D1, duplique des éléments (« application maître ») du système SCADA dans des « nuages » (cloud en anglais) afin de sécuriser les processus de supervision. Il n'est fait mention à aucun moment des caractéristiques ou fonctionnalités du système de supervision SCADA dans la gestion des processus industriels ni, par exemple, d'une liste mémorisée de voisinages utilisée par les nœuds intelligents (« smart nodes ») dans l'exécution de processus industriels. En outre, D1 n'enseigne pas que l'architecture (SKYDA), telle que décrite, peut fonctionner sans utiliser au moins deux Clouds. Le système divulgué dans D1, reste une infrastructure centrale (maître vers esclave RTU (Remote terminal unit)) avec localisation du (des) maître(s) dans un ou plusieurs Clouds.

### EXPOSE DE L'INVENTION

La présente invention a pour but de pallier certains inconvénients de l'art antérieur des systèmes de surveillance et de contrôle de processus industriel ou de services et en particulier de faciliter le partage de données dans un environnement décentralisé, offrant la possibilité au propriétaire qui partage sa donnée d'obtenir des produits dérivés qui sont issue de l'exploitation de sa donnée pour enrichir et améliorer son contrôle et sa gestion tout en conservant une flexibilité d'adaptation à de nouveaux sites en assurant la sécurité.

A cet effet, la présente invention concerne un réseau de Nœuds intelligents pour réseau distribué selon un maillage adaptable aux applications industrielles, chaque nœud permettant, par le biais d'un middleware de communication GCOM, une communication bidirectionnelle de proche en proche avec d'autres nœuds ou une plateforme centrale de gestion de données de masse (Big Data Management) permettant l'acquisition, la gestion et la mémorisation d'un lac de données ou avec un nuage public ou privé, chaque nœud comportant une architecture matérielle informatique, ladite architecture fonctionnant sous un système d'exploitation et une pile logicielle utilisant un langage orienté objet, le réseau étant caractérisé en ce qu' un ou plusieurs nœuds sont déployés à des niveaux d'agrégation différents dont au moins un hors site usine, au moins un près des automates procédés de l'usine, au moins un dans la salle de conduite et au moins un par nuage, l'exécution de ladite pile logicielle sur l'architecture matérielle informatique met en œuvre un ensemble de fonctionnalités, la communication interne au maillage et externe vers d'autres systèmes étant orientée message.

Selon une autre particularité, la communication interne au maillage de nœuds CIS et externe vers d'autres systèmes est basée sur une architecture orientée message contenant soit des données soit des éléments de logique.

Selon une autre particularité, les éléments de logique peuvent être spécifiés unitairement par le biais de la création de services dont la définition est transmise aux logiciels de chaque nœud intelligent (CIS Smart Nodes) par messages et en utilisant les modules OPSY pour la gestion des déploiements et REPOSI pour la gestion des dépôts logiciels ainsi que le module CNFG pour la gestion de la configuration.

Selon une autre particularité, chaque nœud du réseau comporte plusieurs sous-systèmes fonctionnels adaptés à l'agrégation du nœud dans le réseau.

Selon une autre particularité, les sous-systèmes fonctionnels sont sélectionnés pour tous les nœuds parmi les modules suivants :
- CNFG pour la gestion de la configuration de chaque nœud intelligent ;
- OPSY pour la gestion des déploiements logiciels (par exemple pour les patches de sécurité, les évolutions et maintenance applicative) ;
- REPOSI pour la gestion des dépôts logiciels ;
- ITOP pour la gestion de l'interopérabilité avec les systèmes tiers ;
- GCOM pour la gestion de la communication dans le maillage (middleware) ;
- USRM pour la gestion utilisateurs et permissions.

Selon une autre particularité, les sous-systèmes fonctionnels d'un nœud placé dans le voisinage des automates procédés d'une usine comportent : le sous-système LSVC pour la fonctionnalité de gestion des drivers et services techniques pour l'instrumentation industrielle.

Selon une autre particularité, le sous-systèmes fonctionnels GUIF d'un nœud déployé depuis la plateforme centrale permet de réaliser des modules de visualisation web locaux à un atelier donné du procédé défini par le nœud à proximité de l'atelier identifié dans le message.

Selon une autre particularité, les sous-systèmes fonctionnels d'au moins un nœud intermédiaire entre le nœud voisin des automates et le nœud voisin du nuage comportent le module est constitué par HSVC pour la gestion du pré-processing et des calculs locaux sur les résultats ou données usine.

Selon une autre particularité, les sous-systèmes fonctionnels d'au moins un nœud échangeant avec des nœuds disposés dans d'autres pays, comportent le module UTLY pour la gestion des utilitaires comme par exemple la gestion multi-langue.

Selon une autre particularité, le réseau comporte au moins une des fonctionnalités suivantes :
- création et gestion, pour lui-même ou les autres nœuds du maillage, d'objets adaptés à des processus industriels de façon à superviser et à contrôler tout type de processus, l'ensemble des objets définis pour l'ensemble du maillage et connu de chacun des nœuds étant dénommé « dictionnaire objet » ;
- déploiement de plusieurs nœuds en maillage distribué par effet de voisinage ;
- démarrage et communication de chaque nœud via le module de communication, dans son voisinage immédiat grâce à une configuration en usine avec un éventail minimal de fonctionnalités ;
- mémorisation et gestion d'au moins un objet par chaque nœud pour le maintien de l'état actuel de l'objet et utilisant une liste mémorisée de voisinages des nœuds auxquels il est lui-même relié, pour informer chaque nœud voisin de l'éventuel changement d'état de l'objet ;
- association, au module de communication de chaque nœud, d'un identifiant propre au nœud et d'un identifiant de voisinage, pour rendre chaque nœud iso-fonctionnel et apte à recevoir un ordre d'exécution en provenance d'un programme d'un autre nœud du maillage.

Selon une autre particularité, la diffusion systématique de données ou de commandes se fait par configuration du module de diffusion du nœud [Smart Node], ce module de diffusion étant initialement configuré pour mettre en œuvre, par exécution sur l'architecture matérielle informatique, une fonctionnalité de diffusion, au sein du réseau (8), d'une variable ou d'un groupe donné de variables avec une résolution donnée et jusqu'à une profondeur donnée dans le maillage, par exemple 3 ou 4 niveaux de voisinages.

Selon une autre particularité, le réseau comporte un module gestionnaire de nœud gérant les fonctionnalités mises en œuvre par les modules logiciels, exécutes sur l'architecture matérielle informatique, en surveillant et en contrôlant le redémarrage et les mises à jour de sécurité d'un module logiciel qui viendrait à s'interrompre ou mourir.

Selon une autre particularité, chaque objet appartient à au moins une classe qui est une description des caractéristiques d'un ou de plusieurs objets représentatifs d'un processus industriel ou d'une caractéristique métier, chaque objet étant créé à partir de cette classe et constituant une instance de la classe en question, les caractéristiques et l'état d'un objet étant manipulés par des méthodes incorporées dans le nœud intelligent l'état d'un objet correspondant aux informations mémorisées à un instant donné, telles que décrites par les valeurs de l'ensemble de ses propriétés, aussi nommées champs ou attributs.

Selon une autre particularité, chaque nœud comporte au moins une couche logicielle, ladite couche logicielle mettant en œuvre, par exécution sur l'architecture matérielle informatique, une fonctionnalité de mémorisation, en plus des informations en provenance des capteurs de processus, d'un attribut indiquant que le nœud concerné est un parent de l'objet appelé « nœud parent ».

Selon une autre particularité, chaque nœud comporte un dispositif comprenant au moins une couche logicielle, ladite couche logicielle mettant en œuvre, par exécution sur l'architecture matérielle informatique, une fonctionnalité pour informer chaque nœud de son voisinage de façon que les nœuds (voisins informent les autres nœuds suivant un cheminement orienté dans une direction qui dépend de la topologie ou architecture propre du maillage, définissant les liaisons entre les nœuds du réseau, et au besoin suivant un cheminement orienté vers une plateforme centrale ou vers les processus, chaque nœud informant ainsi le reste du maillage et chaque nœud mémorisant ainsi l'objet, son état actuel et le nœud parent auquel l'objet est assigné.

Selon une autre particularité, lesdites fonctionnalités mises en œuvre par le nœud comporte également la diffusion, sous forme de séries temporelles, des données collectées ou calculées par chaque nœud, ladite diffusion étant réalisée par l'utilisation d'au moins l'un des deux modes de diffusion de données suivants: un mode de diffusion dit systématique dans lequel les données sont diffusées avec une résolution donnée et jusqu'à une profondeur donnée dans le maillage et, un mode de diffusion dite opportuniste dans laquelle au moins un nœud voisin d'un autre nœud concerné par une requête initiale donnée, enregistre de manière autonome l'information ou la donnée qui transite par lui sur sa mémoire afin de rediffuser ladite donnée ou information lorsqu'une requête similaire à la requête initiale est à nouveau posée, le pattern ou schéma de diffusion de données diffusées par les nœuds étant diffèrent d'un schéma de réplication systématique dans lequel le schéma de diffusion de données est dupliqué à l'identique pour tous les nœuds.

Selon une autre particularité, chaque nœud est configuré pour mettre en œuvre une fonctionnalité, prévue, d'historisation systématique des données, mais également le stockage des actions qui se déroulent périodiquement ou des actions relatives au mode de diffusion dit opportuniste dans sa mémoire, chaque nœud ayant ainsi la capacité de se comporter de manière autonome pour l'historisation des données recueillies lors des actions se déroulant périodiquement ou des actions relatives au mode de diffusion dit opportunistes.

Selon une autre particularité, chaque nœud du maillage ou une plateforme centrale comporte un dispositif comprenant au moins une couche logicielle , ladite couche logicielle mettant en œuvre, par exécution sur l'architecture matérielle informatique, les fonctionnalités de création et de gestion, pour lui-même ou elle-même ou les autres nœuds du maillage, d'objets adaptés à des processus industriels de façon à contrôler tout type de processus, l'ensemble des objets définis pour l'ensemble du maillage et connu de chacun des nœuds étant dénommé « dictionnaire objet ».

Selon une autre particularité, chaque nœud dispose au moins d'une interface d'accès à une image du « dictionnaire objet », cette interface étant configurée pour définir un nouveau nœud ou un nouvel objet pour un nœud, la requête en modification étant diffusée dans le maillage et transmise d'un nœud à un autre jusqu' au nœud parent concerné si la modification apportée au dictionnaire ne porte pas sur le nœud depuis lequel le gestionnaire est accédé, le nœud parent de l'objet procédant alors, à l'exécution de la requête, le résultat de l'exécution étant ensuite diffusé à son tour dans le reste du maillage, chaque nœud recevant ce résultat mettant ensuite à jour sa propre image du « dictionnaire objet ».

Selon une autre particularité, lesdites fonctionnalités mises en œuvre par chaque nœud intelligent comporte la rediffusion, via son module de diffusion, au reste du maillage et à des intervalles de temps configurables l'état de ses propres objets, afin de pallier à toute rupture temporaire ou persistante de communication dans le maillage, cette capacité permettant au maillage de rétablir au besoin, l'intégrité des différentes images, associées aux différents nœuds du maillage, du « dictionnaire objet ».

Selon une autre particularité, les objets sont manipulés sans que les modifications apportées à l'état d'un objet ne fassent appel à l'état d'un autre objet ni n'influencent celui-ci, chaque objet ayant une autorisation d'accès pour toute utilisation ou toute entité du processus industriel, les attributs ou champs de définition des objets étant changés dynamiquement par le gestionnaire de nœud.

Selon une autre particularité, chaque objet utilise une méthode qui définit un paramètre qualité qui lui est associé, ledit paramètre qualité représentant l'écart entre une valeur cible désirée de l'état d'un objet et l'état réel de la valeur.

Selon une autre particularité, chaque nœud du maillage ou la plateforme centrale (10) comporte un dispositif comprenant au moins une couche logicielle, ladite couche logicielle mettant en œuvre, par exécution sur une architecture matérielle informatique, une fonctionnalité de connexion à n'importe quel nœud du maillage, par envoi de l'identifiant du nœud à modifier, de façon à modifier à distance et dynamiquement le nœud concerné même si l'utilisateur est connecté à un nœud qui n'est pas le nœud parent de l'objet qu'il veut modifier..

D'autres particularités et avantages de la présente invention sont détaillés dans la description qui suit.

### BREVE DESCRIPTION DES FIGURES

D'autres particularités et avantages de la présente invention apparaîtront plus clairement à la lecture de la description ci-après, faite en référence aux dessins annexés, dans lesquels :
- la figure 1 représente schématiquement un déploiement type d'une infrastructure évolutive d'un réseau de nœuds intelligents pour le contrôle de processus industriels ou de service connectés à un ou plusieurs nuages ;
- la figure 2 représente schématiquement l'architecture matérielle 200 d'un nœud intelligent ;
- la figure 3 représente schématiquement les piles logicielles installables sur les nœuds ;

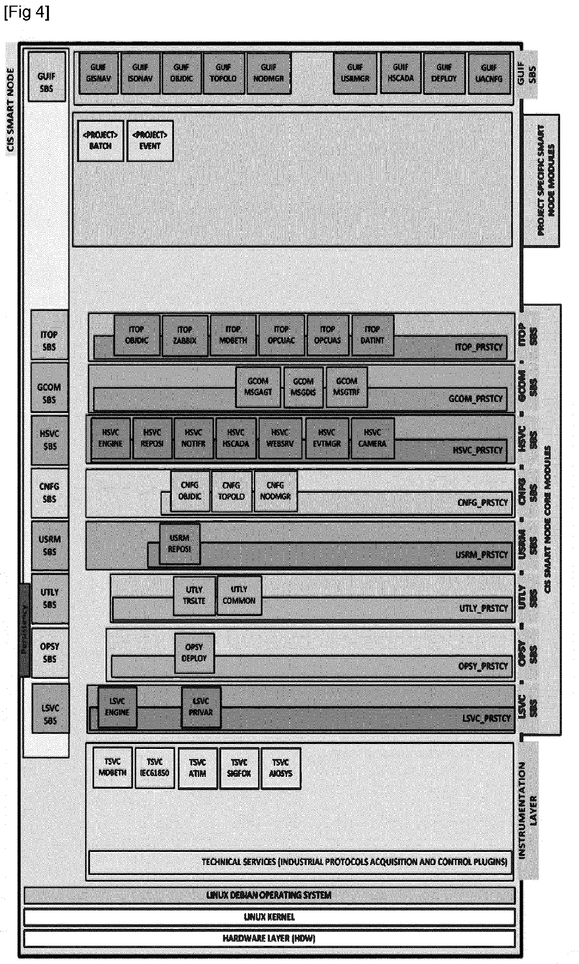

- la figure 4 représente le découpage en module de chaque sous système logiciel ;

### DESCRIPTION DES MODES DE REALISATION

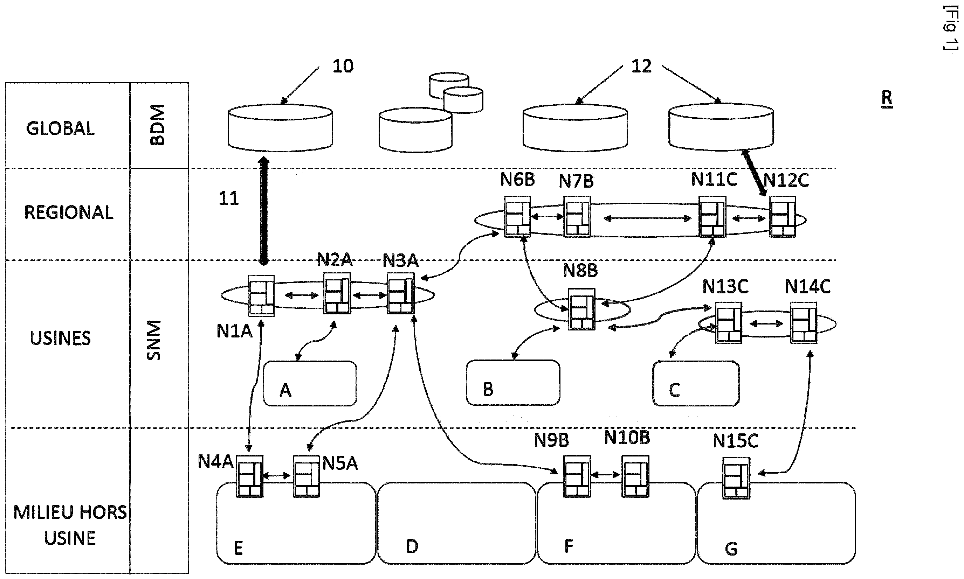

La figure 1 illustre un déploiement type d'une infrastructure réseau évolutive de nœuds intelligents (Smart Nodes SN) dans le cadre d'une application industrielle. Les Nœuds Intelligents (Smart Nodes SN) sont donc déployés sur un ou plusieurs sites (A, B, C), sur des ateliers de traitement différents voire sur des infrastructures tierces (E, D, F, G) permettant la collecte de la donnée (territoire, météo, back-ends de capteurs sans fils).

La présente invention concerne un réseau constitué de nœuds intelligent (N, figure 1) [Smart Node] pour constituer un réseau (R) distribué selon un maillage évolutif de gestion et surveillance d'un processus ou plusieurs processus industriels ou de service comme représenté sur la figure 1. Cette infrastructure de type Edge computing est basée sur un maillage de noeuds logiciels appelés les Smart Nodes. Le Edge computing est la capacité pour une infrastructure logicielle de savoir déployer, gérer et exécuter des modules logiciels à forte valeur ajoutée (calculs, optimisation, aide à la conduite) aux extrémités du réseau (Edge) et en particulier au niveau des réseaux opérationnels donc au plus proche des procédés industriels. Les capacités de Edge computing se distinguent donc des systèmes de supervision industrielle classiques, qui pour leur part, sont architecturés uniquement pour remonter de la donnée industrielle sans déployer d'intelligence à l'extrémité du réseau. Dans un système de supervision classique (SCADA), les équipements (RTUs) sont configurés statiquement et leur fonction première est d'exposer de la donnée.

Dans l'exemple de la figure un site industriel A envoie les données de ses processus ou capteurs vers un nœud (N2A) lequel a pour voisinage les nœud (N1A) en communication bidirectionnelle avec une plateforme (10) et avec un nœud (N3A) qui communique avec un nœud (N8B). Le nœud (N1A) communique également avec des nœuds (N4A et N5A) collectant des données provenant de capteurs externes ou d'infrastructures tierces. Le nœud N8B communique avec le site B et avec une plateforme de nœuds (N6B, N7B, N11C, N12C) communicant entre eux et avec un nuage 12.

Le Nœud (N13C) communique avec les instruments ou les capteurs ou les automates du site C et par le nœud (N14C) avec un nœud (N15C) collectant d'autres données provenant de capteurs externes ou d'infrastructures tierces.

Enfin les nœuds (N9B, N10B) sont reliés aux capteurs ou caméras d'un milieu hors usine nécessaire dans l'application. Le Nœud (N9B) a pour voisinage réseau le nœud (N10B et N3A). Le nœud (N7B) a pour voisinage réseau (N3A, N13C, N12C et N6B)

Le maillage de nœuds est connecté de manière bidirectionnelle avec la plateforme Smart and Big Data (10). Ce maillage fournit à la plateforme une partie M2M pour les communications sur le terrain (acquisition de données et redescente de consignes) mais aussi une infrastructure pour des traitements et services distribués (Edge) localement (pré-traitements, calculs de supervision industrielle, algorithmes de prédiction ou d'aide à la conduite, interfaces graphiques à destination des opérateurs en mobilité).

Ainsi le réseau permet la redescente vers Smart Node N1A,N7B et N13C depuis le BDM Central (via le Smart Node N12C) de la valeur ajoutée issue de l'analyse de la donnée (points de consignes optimisés, indicateurs, prévisions, données externes, modèles entrainés).

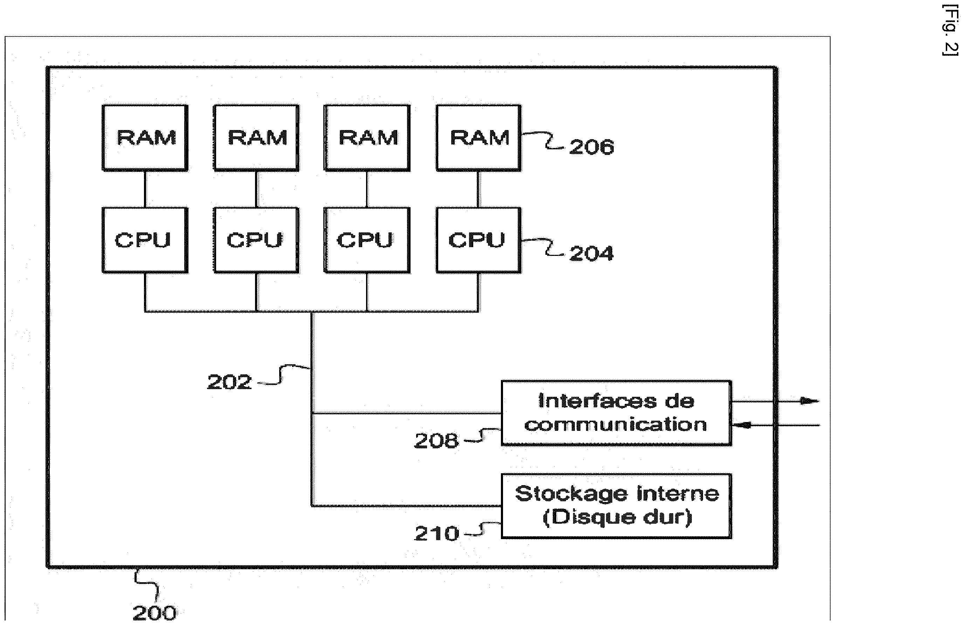

Comme le montre la figure 2, chaque nœud comprend généralement un ou plusieurs microprocesseurs, des mémoires locales et une interface de communication. Plus précisément, le dispositif 200 comprend ici un bus de communication 202 auquel sont connectés :
- unités centrales ou microprocesseurs 204 ;
- composant de mémoire vive (RAM) 206, comprenant des registres adaptés pour enregistrer des variables et des paramètres créés et modifiés lors de l'exécution de programmes (comme indiqué, chaque composant de mémoire vive peut être associé à un microprocesseur) ; et,
- interfaces de communication 208 adaptées pour envoyer et recevoir des données.

Le nœud 200 comprend en outre ici des moyens de stockage internes 212, tels que des disques durs, capables notamment de contenir le code exécutable de programmes.

Le bus de communication permet une communication bidirectionnelle et une interopérabilité entre les différents éléments inclus dans le dispositif 200 ou connectés à celui-ci. Les microprocesseurs 204 contrôlent et dirigent l'exécution d'instructions ou de parties de code logiciel du programme ou des programmes. Lors de la mise sous tension, le ou les programmes stockés dans une mémoire non volatile, par exemple un disque dur, sont transférés dans la mémoire vive 206.

Les (Smart Nodes) nœuds intelligents (par leurs contributions logicielles) sont déployés entre l'acquisition des données et la ou les plateformes de données de masse intelligentes (smart and big data) à des niveaux d'agrégation différents (hors usine, près des automates procédés, en salle de conduite, dans un nuage (cloud) public ou privé donc dans des voisinages réseau différents.

Une communication bidirectionnelle et de proche en proche entre voisinages est mise en place par le biais de l'intergiciel (middleware) de communication GCOM de chaque Nœud intelligent. L'ensemble constitue un maillage (Mesh). On parle alors de SNM (Smart Node Mesh). Le SNM est donc en charge de nourrir la partie d'analyse de la donnée Big Data Management (BDM) pour valoriser la donnée puis de redescendre et servir au plus proche du procédé le résultat et les services issus de la valorisation de la donnée au niveau central.

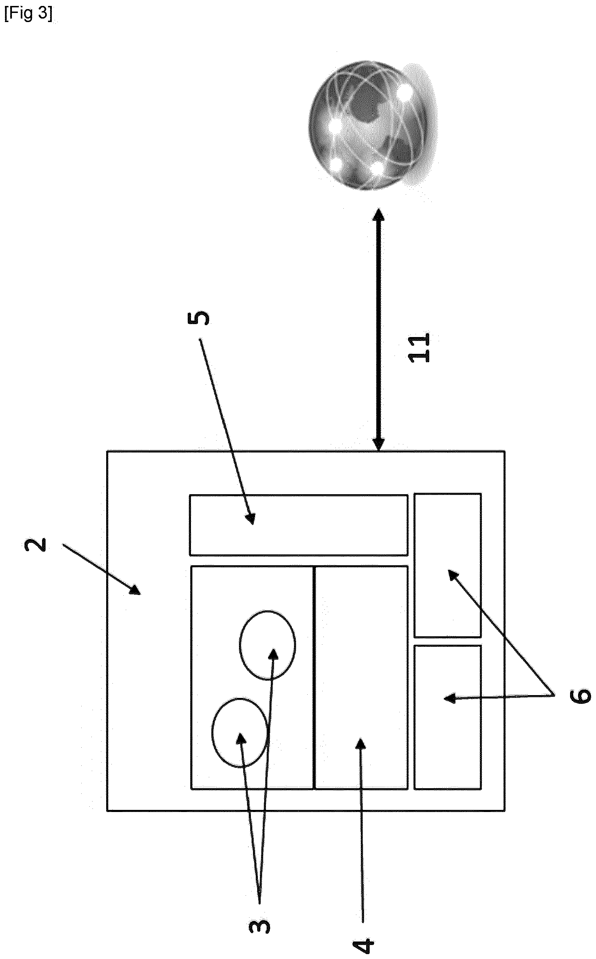

Dans certains modes de réalisation, chaque nœud intelligent incorpore une pile logicielle (2, 3, 4, 5, 6 ,figure 3) à faible empreinte (10 à 800 Mbytes, par exemple de 300Mbytes à 600Mbytes pour des couches de supervision industrielle et de rendu graphique), à faible consommation de ressources et cette pile peut s'exécuter, par exemple sur une architecture matérielle durcie (non représentée), de type X86 ou ARM type Raspberry ou MIPS, sobre en énergie et résistant à des conditions environnementales sévères (chocs et vibration, température de -40 à +80°C) fonctionnant sous un système d'exploitation LINUX ou similaire.

La couche 2 est constituée d'une interface homme machine qui peut inclure un sous système GUIF qui peut être présente sur tous les nœuds ou selon les choix de l'utilisateur sur un nombre limité de nœuds.

La couche 5 est constituée de l'intergiciel de communication GCOM de la table de la figure 3.

La couche 6 est constituée du sous système logiciel LSVC de gestion des drivers et services techniques pour l'instrumentation industrielle. Cette couche est nécessaire pour le nœud extrêmes en liaison avec les sites industriels ou les capteurs externes.

Les couches 3 et 4 sont constituées par celles définies dans la table de la figure 3 et qui n'ont pas encore été citées ci dessus ; à savoir OPSY, UTLY, REPOSI, CNFG, USRM, HSVC.

Un nœud intelligent [Smart Node] se conforme à une architecture de type micro services. Il est construit autour d'une épine dorsale le gestionnaire de Nœud [Node Manager] qui est programmé pour activer dynamiquement et à la demande un panel de fonctionnalités parmi les catégories suivantes :
- Capacités d'acquisition et d'instrumentation (exemple : en Modbus, ou de Signaux Physiques) parle sous système LSVC.
- Historisation des données et messages, mise en forme et calculs décentralisés sur la donnée
- Tableaux de bord web pour les opérateurs en mobilité
- Passerelle (Gateway) et Interopérabilité (par le sous-système ITOP) Machine To Machine (M2M) qu'ils soient internes, externes ou tiers.

Le logiciel CIS Smart Node exécuté sur chaque nœud intelligent est basé sur une conception modulaire et chaque nœud, en fonction de son emplacement dans le maillage est équipé des modules nécessaires :
Les modules sont répartis dans différents sous-systèmes fonctionnels (functional subsystems, acronyme SBS).

La table ci-dessous liste les différents sous-systèmes fonctionnels du logiciel CIS Smart Node :

**[Table 1]**

| **Nom** | **Définition** | **Fonctionnalité** |
|---|---|---|
| **LSVC** | (Low Level Service Subsystem) Sous sytsème de service bas niveau | Gestion des drivers et services techniques pour l'instrumentation industrielle (ex: Modbus) |
| **OPSY** | (Operating System Subsystem) Sous système de système d'exploitation | Gestion des déploiements logiciels (patches de sécurité, évolutions et maintenance applicative) |
| **UTLY** | (Utility Subsystem) Sous système utilitaires | Gestion des utilitaires (ex: Gestion multilangue) |
| **REPOSI** | (Repository Subsystem) Sous système répertoires | Gestion des dépôts logiciels |
| **CNFG** | (Configuration Subsystem) Sous système configuration | Gestion de la configuration du Smart Node |
| **HSVC** | (High Level Service Subsystem) Sous système de service haut niveau | Gestion du pré-processing et des calculs locaux |
| **GCOM** | (Grid Communication Subsystem) Sous système de grille de communication | Gestion de la communication dans le maillage (CIS Middleware) |
| **ITOP** | (Interoperability Subsystem) Sous système d'interopérabilité | Gestion de l'nnteroperabilité avec les systèmes tiers et externs |

Chaque sous-système peut héberger plusieurs modules.

Chaque module couvre une fonctionnalité précise au sein du Nœud intelligent (Smart Node). Une fonctionnalité donnée peut être générique ou spécifique à un métier / projet par exemple par rapport à un domaine d'application industriel.

La figure 5 présente l'ensemble des modules fonctionnels constitutifs d'un logiciel Smart Node CIS.

La communication interne au maillage de nœuds CIS et externe vers d'autres systèmes (ex : Plateforme IoT) est basée sur une architecture orientée message contenant soit des données soit des éléments de logique (par exemple un module d'aide à la conduite ou un module de calculs de pré-processing pouvant intervenir dans un Nœud défini du maillage).

Contrairement à la majorité des systèmes SCADA et IoT le logiciel CIS Smart Node n'est pas conçu pour transporter uniquement de la donnée.

Il permet également de déployer des éléments de logique (ex: calculs de pré-processing par le module HSVC, ou aussi un module d'aide à la conduite). Ces éléments peuvent être spécifiés unitairement par le biais de la création de services dont la définition est transmise aux logiciels de chaque nœud intelligent (CIS Smart Nodes) par messages et en utilisant les modules OPSY et REPOSI ainsi que le module CNFG.

Ces messages sont pris en compte dynamiquement par les sous-systèmes de services (OPSY, REPOSI et CNFG) en charge de l'activation des nouveaux éléments. Cette architecture permet donc de configurer à distance l'infrastructure d'acquisition.

Dans le cadre d'un pilote de conduite de processus industriel, ces capacités permettront notamment de s'adapter rapidement aux évolutions de l'instrumentation et des modules de traitement nécessaires aux évolutions techniques du processus ou celles en lien avec le procédé usine existant.

Elles permettront également de distribuer les modules d'aide à la conduite résultant de l'analyse de la donnée effectué au niveau central d'un nuage.

Les données d'entrée / sortie nécessaires et produites par les services de traitement d'un Nœud Intelligent (Smart Node) sont stockées localement et également transmises sous forme de séries temporelles ou de fichiers de données.

Ces données sont transportées par le maillage de nœuds intelligents (Smart Nodes) et mises à disposition de la brique centrale d'analyse de la donnée (BDM). La plateforme centrale d'analyse de la donnée héberge des ateliers et des services de Machine Learning permettant d'élaborer et d'entrainer des modèles d'optimisation et d'aide à la conduite.

Le résultat de l'exécution des modèles d'optimisation dans la brique centrale d'analyse de la donnée (ex : prédiction de débit, points de consignes) vont produire des variables et indicateurs. Ces variables peuvent être également être gérées sous forme de séries temporelles par le maillage de Nœuds intelligents (Smart Nodes).

Ces variables peuvent notamment être transportées depuis la brique centrale jusqu'au niveau de l'usine afin de nourrir les interfaces graphiques d'aide à la conduite.

La communication dans le maillage gérée par le sous-système GCOM au niveau de chaque nœud, peut également à terme permettre de déployer par le sous système GUIF depuis la plateforme centrale des modules de visualisation web locaux à un atelier donné du procédé associé à un nœud identifié dans le message. Il sera donc possible pour un technicien en mobilité (muni d'une tablette ou d'un smart phone) d'accéder à des services (ex : aide à la conduite) avec un même niveau de supervision qu'en étant présent dans une salle de contrôle.

Dans certains modes de réalisation, la diffusion systématique de données ou de commandes se fait par configuration du module de diffusion du nœud faisant partie du sous-système CNFG de configuration des nœuds. Ce module de diffusion étant initialement configuré pour diffuser par messages, une variable ou un groupe donné de variables avec une certaine résolution et jusqu'à une certaine "profondeur dans le maillage", par exemple 3 ou 4 niveaux de voisinages.

Dans certains modes de réalisation, une fonctionnalité additionnelle est tout d'abord implémentée sous forme de module reconnu par le gestionnaire de nœud (OPSY) qui saura donc par conséquent gérer son cycle de vie, un nœud donné étant configuré pour fonctionner avec un certain panel de modules logiciels sous la surveillance et le contrôle du gestionnaire de déploiement de nœud, ce gestionnaire (OPSY) étant en charge du redémarrage et des mises à jour de sécurité d'un module qui viendrait à s'interrompre ou mourir, des évolutions et des maintenances applicatives.

Dans certains modes de réalisation, chaque nœud intelligent, par exemple (N15C) pour réseau distribué comporte un intergiciel (GCOM) incorporant un agent de communication permettant des communications bidirectionnelles (11) avec d'autres nœuds (N13C, N14C, N8B, N3A, N1A) ou, de préférence, vers une la plateforme centrale (10) et par le nœud voisin (N8B), vers les nœuds voisins (N6B, N7B, N11C, N12C) communicant avec le nuage (12) selon le besoin. Cet intergiciel (GCOM) combiné avec le sous système fonctionnel OPSY permet ainsi le déploiement de plusieurs nœuds en réseau maillé distribué (8) par effet de voisinage.

Dans un mode de réalisation, chaque nœud comporte un agencement matériel et logiciel, de mémorisation et de gestion d'au moins un objet, assurant le maintient de l'état de l'objet à chaque instant dit « état réel » ('actual status' en anglais par opposition à 'targeted status', état désiré) et mettant en œuvre au moins une méthode de surveillance du changement de l'état de l'objet. Cette méthode utilise une liste mémorisée des voisinages des nœuds auxquels le nœud est lui-même relié, pour informer par l'utilisation de cette liste, chaque nœud voisin de l'éventuel changement d'état de l'objet.

Dans certains modes de réalisation, chaque nœud informe chaque nœud de son voisinage puis les nœuds voisins informent les autres nœuds suivant un cheminement orienté selon la topologie propre du maillage et au besoin vers la plateforme centrale (10) ou vers le nuage (12) ou vers les processus industriels, chaque nœud informant ainsi le reste du maillage et chaque nœud mémorisant ainsi l'objet, son état actuel et le nœud parent auquel l'objet est assigné.

Le déploiement des nœuds dans le maillage s'opère typiquement de la manière suivante : le logiciel de chaque nœud est configuré en usine avec un éventail minimal de fonctionnalités lui permettant de démarrer et de communiquer dans son voisinage immédiat. Ces fonctions de base permettent une première diffusion de proche en proche des caractéristiques du nœud, à savoir son identifiant et les objets configurés. Par objet on entend toute représentation de données métier ou technique définissant une variable et/ou un service.

Dans une variante si une interface graphique locale est incorporée à chaque nœud, elle permet, alors, de travailler sur le nœud le plus facile d'accès tout en autorisant la configuration et la modification des services et fonctionnalités d'un nœud intelligent distant.

Les modifications les plus courantes sont:
- L'ajout d'objets supplémentaires
- La modification de la politique de diffusion de la donnée.
- L'activation et/ou la mise en place d'un module logiciel supplémentaire (exemple : la capacité pour le nœud intelligent de devenir server web, la capacité à inter-opérer avec un nouveau système, etc.). Une fonctionnalité additionnelle est tout d'abord implémentée sous forme de module reconnu par le gestionnaire de nœud [Node Manager] qui saura donc par conséquent gérer son cycle de vie. Un nœud [Smart Node] donné est donc configuré pour fonctionner avec un certain panel de modules sous la surveillance et le contrôle du gestionnaire de nœud [Node Manager]. Si un module vient à s'interrompre ou mourir, le gestionnaire de nœud [Node Manager] est en charge de son redémarrage et des mises à jour de sécurité.

Un autre facteur innovant est qu'il n'est absolument pas nécessaire que le nœud intelligent [Smart Node] sur lequel un utilisateur travaille soit celui qu'il souhaite modifier ou soit sur le même réseau ou en "visibilité IP directe" tel que le serait un client avec un serveur classique. En effet la communication dans le maillage repose sur une communication de proche en proche. Par exemple et de façon non limitative, Une modification est opérée localement sur un nœud A à destination d'un nœud C. Le nœud A partage le même voisinage (V_{A,B}) que le nœud B qui a pour voisinage (V_{B,A}; V_{B,C};). Le nœud B partage le même voisinage que les nœuds C. Le nœud B est informé de la modification opérée sur le nœud A à l'attention de C. Comme celle ci ne le concerne pas, il se contente d'en informer son voisinage, c'est à dire C. Ainsi de proche en proche la demande de modification arrive dans le voisinage concerné et au nœud [Smart Node] concerné (EC. Le nœud C procède à la modification et si elle réussit, il informe son voisinage que sa configuration a changé. La notification de succès de la modification est ainsi propagée en retour au reste du maillage.

Dans certains modes de réalisation, les nœuds sont iso-fonctionnels, chaque nœud recevant un ordre d'exécution en provenance d'un programme d'un autre nœud du maillage, les ordres d'exécution étant soit identiques, soit différents d'un nœud à un autre. Ledit programme associe, également, au module de communication de chaque nœud un identifiant propre au nœud et un identifiant de voisinage. Le module de communication ayant son identifiant de nœud et l'identifiant de voisinage, émet des messages ou requêtes à destination de tous les branchements qu'il a eu par des moyens filaires ou sans fil, Par exemple et de manière non limitative, si la requête concerne les résultats d'une mesure, elle est envoyée vers tous les nœuds du voisinage. Si parmi les nœuds du voisinage il y en a au moins un dans le voisinage immédiat du nœud émetteur qui a en mémoire les résultats, ces derniers sont transférés au nœud concerné. Si les nœuds du voisinage ne sont pas en mesure de répondre à la requête, la requête est transférée vers les nœuds de leur voisinage respectif jusqu'à ce que le nœud qui a effectué les mesures y réponde. Si aucun nœud n'a effectué de mesures, la requête est transmise au nœud se trouvant au voisinage du capteur chargé de faire les mesures. Une fois ces dernières effectuées, les résultats sont transmis de voisinage en voisinage jusqu'au nœud émetteur de la requête.

Dans certains modes de réalisation, les nœuds ont une capacité mémoire importante, chaque nœud assurant un mode de fonctionnement d'historisation systématique prévu par sa configuration propre, mais également une capacité de stockage réservée aux actions épisodiques ou opportunistes. Chaque nœud a ainsi la capacité de se comporter de manière assez autonome (presqu'à l'instar d'un humain) pour l'historisation des données jugées opportunes.

L'intergiciel GCOM (middleware) devra pouvoir assurer un déploiement en maillage des nœuds sur des réseaux distincts et hétérogènes en utilisant le sous-système ITOP, sans avoir à recourir à la construction d'un Virtual Private Network (VPN). En effet les déploiements pourront impliquer une multitude de sites et d'entités différentes. L'établissement d'un VPN induirait des latences et des coûts bien trop importants.
- L'intergiciel (GCOM) devra, également, en utilisant le sous-système OPSY implémenter des fonctions de sécurité (patches de sécurité) pour assurer la confidentialité et l'intégrité des données échangées entre les nœuds d'une part et également avec la brique de gestion de donnée de masse (Big Data Management).
- L'intergiciel (GCOM) devra assurer des échanges bidirectionnels performants sécurisés avec la plateforme de donnée de Masse (Big Data) en utilisant aussi le sous -système (USRM) gérant les utilisateurs et les permissions associées. Il devra dans un premier temps supporter l'échange de données puis la distribution de services de pré-calcul à exécuter au plus proche du terrain ou bien encore des instances d'implémentation de services de prédiction (Machine Learning) préalablement entraînés sur une plateforme (10) centrale de gestion de donnée de masse (Big Data Management).

Dans le cadre d'un pilote industriel ces capacités permettront notamment de s'adapter rapidement aux évolutions de l'instrumentation et des modules de traitement nécessaires aux nouvelles technologies du pilote ou celles en lien avec le procédé usine existant.

Elles permettront également de distribuer les modules d'aide à la conduite résultant de l'analyse de la donnée à un niveau central.

Les données d'entrée / sortie nécessaires et produites par les services de traitement d'un Nœuds Intelligents (Smart Nodes sont stockées localement et également transmises sous forme de séries temporelles ou de fichiers de données ;
Ces données sont transportées par le maillage de Nœuds Intelligents (Smart Nodes) et mises à disposition de la brique centrale d'analyse de la donnée (BDM). La plateforme centrale d'analyse de la donnée héberge des ateliers et des services de Machine Learning permettant d'élaborer et d'entrainer des modèles d'optimisation et d'aide à la conduite.

Le résultat de l'exécution des modèles d'optimisation (ex : prédiction de débit, points de consignes) va produire des variables et indicateurs. Ces variables peuvent être également être gérées sous forme de séries temporelles par le maillage de Nœuds intelligents (Smart Nodes).

Elles peuvent notamment être transportées depuis la brique centrale jusqu'au niveau de l'usine afin de nourrir les interfaces graphiques d'aide à la conduite.

La communication dans le maillage peut également à terme permettre de déployer depuis la plateforme centrale des modules de visualisation web locaux à un atelier donné du procédé. Il sera donc possible pour un technicien en mobilité (muni d'une tablette ou d'un smart phone) d'accéder à des services (ex : aide à la conduite) avec un même niveau de supervision qu'en étant présent dans une salle de contrôle.

Ainsi selon certains modes de réalisation le réseau proposé repose sur un maillage de nœuds intelligents, adaptables selon le niveau d'agrégation entre le nuage et les sites industriels ou de services et utilisant des messages pour la transmission des données ou des éléments logiques nouveaux à déployer.

La solution se différencie donc par l'adaptabilité du réseau en permettant l'ajout des nœuds à tout moment par le sous système de configuration, en transmettant aussi bien des données que des éléments logiques dans les messages transmis de voisinage en voisinages, en introduisant des modifications des éléments logiciels et en adaptant les sous systèmes des nœuds avec les fonctionnalités nécessaires à leur niveau d'agrégation dans le cheminement entre les sites industriels ou de services et les nuages fournissant le service de valorisation des données, Cette solution permet aussi la modification des voisinages des nœuds pour modifier le maillage.

L'implémentation des couches fonctionnelles de ce système d'information global s'opère donc à des niveaux d'agrégation différents, il ne s'agit donc pas uniquement d'un système central classique mais d'une infrastructure capable d'adresser une problématique fortement distribuée (capteurs en milieu naturel, véhicules ou personnes en mouvement, usines sur sites différents, d'interopérabilité avec des systèmes régionaux tiers ou systèmes centraux) et fortement dynamique (déploiements de nouveaux services, mise à l'échelle, adaptabilité à la disponibilité ou non de paramètres nécessaires à l'hyper-vision ou à l'optimisation de conduite des procédés.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

On comprendra aisément à la lecture de la présente demande que les composants de la présente invention, comme généralement décrits et illustrés dans les figures, peuvent être arrangés et conçus selon une grande variété de configurations différentes. Ainsi, la description de la présente invention et les figures afférentes ne sont pas prévues pour limiter la portée de l'invention mais représentent simplement des modes de réalisation choisis.

Plusieurs unités fonctionnelles décrites dans la présente description ont été nommées « modules », afin de souligner leur indépendance d'exécution. Par exemple, un module peut être mis en œuvre par circuit électronique, tel qu'un circuit intégré par exemple ou par d'autre types d'arrangement de composants, tels que par exemple des semi-conducteurs, des portes logiques, des transistors ou d'autres composants discrets. De tels modules peuvent également être mis en œuvre par une ou plusieurs application(s) logicielle(s) ou portion(s) de code exécutable(s) au sein d'au moins un environnement logiciel, pour l'exécution par divers types de processeurs et ce, quel que soit le langage utilisé. Un module identifié peut, par exemple, comporter un ou plusieurs blocs physiques ou logiques d'instructions machine qui peuvent, par exemple, être organisés en objet, procédé, ou fonction. De plus, les routines et instructions d'un module identifié n'ont pas besoin d'être physiquement localisés ensemble, mais peuvent comporter des instructions disparates stockées dans différents endroits qui, une fois réunis fonctionnellement et logiquement ensemble, forment le module et réalisent le but indiqué pour le module.

En effet, un module peut être une instruction simple de code exécutable, ou une pluralité d'instructions, et peut même être distribué parmi plusieurs différents segments de code ou parmi différents programmes et stocké dans plusieurs blocs de mémoires. De même, des données opérationnelles peuvent être identifiées et illustrées dans des modules, et peuvent être incorporées sous n'importe quelle forme appropriée et être organisées dans n'importe quel type approprié de structure de données. Les données opérationnelles peuvent être rassemblées ou peuvent être réparties sur différents endroits incluant différents dispositifs de stockage finis, et peuvent exister, au moins partiellement, simplement en tant que signaux électroniques sur un système ou un réseau. De plus, par le terme système, on entend ici tout type de terminal ou dispositif agencé pour effectuer les fonctions décrites en référence aux modules. Le système comporte des moyens de traitement de données permettant de réaliser ces fonctions décrites et pourra donc comporter des circuits spécifiques réalisant ces fonctions ou comporter, d'une manière générale, des ressources informatiques permettant d'exécuter les instructions décrites précédemment.

Les références dans la présente description à une implémentation, un mode ou une variante de réalisation signifie qu'un dispositif, ou un module, ou une structure, ou une caractéristique particulière décrite est inclus dans au moins un mode de réalisation de la présente invention et que les différents exemples ne se rapportent pas forcément au même mode de réalisation.

En outre, les dispositifs, les structures, ou les caractéristiques décrites peuvent être combinés de n'importe quelle façon appropriée dans un ou plusieurs mode(s) de réalisation, à moins qu'ils ne soient incompatibles entre eux. Dans la présente description, de nombreux détails spécifiques sont fournis à titre illustratif et nullement limitatif, de façon à détailler précisément l'invention. L'homme de métier comprendra cependant que l'invention peut être réalisée en l'absence d'un ou plusieurs de ces détails spécifiques ou avec des variantes. A d'autres occasions, certains aspects ne sont pas détaillés de façon à éviter d'obscurcir et alourdir la présente description et l'homme de métier comprendra que des moyens divers et variés pourront être utilisés et que l'invention n'est pas limitée aux seuls exemples décrits.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la protection demandée, et l'invention ne doit pas être limitée aux détails donnés ci-dessus.

Après avoir décrit et illustré les principes de l'invention en référence à divers modes de réalisation, il sera reconnu que les divers modes de réalisation peuvent être modifiés en termes d'agencement et de détail sans s'écarter de ces principes. On comprendra que les différents concepts et aspects de l'invention décrits ci-dessus peuvent être mis en oeuvre, par exemple, en utilisant un ou plusieurs processeurs, modules, instructions exécutables par machine, ordinateurs et / ou serveurs. Il convient de comprendre que les concepts et les aspects de l'invention décrits ici ne sont pas liés ni limités à un type particulier d'environnement informatique, sauf indication contraire. Différents types d'environnements informatiques spécialisés peuvent être utilisés pour effectuer des opérations conformément aux enseignements décrits ici. Les éléments des modes de réalisation montrés dans le logiciel peuvent être implémentés dans le matériel et inversement.

Un ou plusieurs dispositifs, processeurs ou dispositifs de traitement peuvent être configurés pour exécuter la ou les fonctions de chacun des éléments et modules de l'agencement structurel décrit ici. Par exemple, le ou les dispositifs, processeurs ou dispositifs de traitement peuvent être configurés pour exécuter une ou plusieurs séquences d'une ou plusieurs instructions exécutables par la machine contenues dans une mémoire principale afin de mettre en œuvre le ou les procédés ou la ou les fonctions décrits dans la présente. L'exécution des séquences d'instructions contenues dans une mémoire principale amène les processeurs à exécuter au moins certaines des étapes du processus ou des fonctions des éléments décrits ici. Un ou plusieurs processeurs dans un agencement multi-traitement peuvent également être utilisés pour exécuter les séquences d'instructions contenues dans une mémoire principale ou un ordinateur lisible en mémoire. Dans des variantes de modes de réalisation, des circuits câblés peuvent être utilisés à la place ou en combinaison avec des instructions logicielles. Ainsi, les modes de réalisation ne sont limités à aucune combinaison spécifique de circuits matériels et logiciels. Le terme "support lisible par ordinateur", tel qu'utilisé ici, désigne tout support qui participe à la fourniture d'instructions à un processeur pour exécution. Un tel support est non transitoire et peut prendre de nombreuses formes, y compris, mais sans s'y limiter, un support non volatile, un support volatile et un support de transmission. Les supports non volatiles incluent, par exemple, les disques optiques ou magnétiques. Les supports volatiles incluent la mémoire dynamique. Les supports de transmission comprennent les câbles coaxiaux, le fil de cuivre et les fibres optiques. Les formes courantes de supports lisibles par ordinateur incluent, par exemple, une disquette, un disque flexible, un disque dur, une bande magnétique, tout autre support magnétique, un CD-ROM, un DVD, tout autre support optique, des cartes perforées, un autre support physique avec des motifs de trous, une RAM, une PROM et une EPROM, une FLASH-EPROM, toute autre puce mémoire ou cartouche, une onde porteuse comme décrit ci-après, ou tout autre support pouvant être lu par un ordinateur. Diverses formes de supports lisibles par ordinateur peuvent être impliquées dans le transport d'une ou plusieurs séquences d'une ou plusieurs instructions au processeur pour exécution.

Des programmes d'ordinateur comprenant des instructions exécutables par une machine pour la mise en œuvre d'au moins une des étapes des procédés et / ou des aspects et / ou des concepts de l'invention décrits ici ou une ou plusieurs fonctions de divers éléments de l'agencement structurel décrit ici peuvent être mis en œuvre ou plusieurs ordinateurs comprenant au moins une interface, un processeur physique et une mémoire non transitoire (également appelé, de manière générale, un support de stockage ou de lecture lisible par machine non transitoire). L'ordinateur est un ordinateur à usage spécial, car il est programmé pour exécuter des étapes spécifiques du ou des procédés décrits ci-dessus. La mémoire non transitoire est codée ou programmée avec des instructions de code spécifiques pour la mise en oeuvre du ou des procédés ci-dessus et de ses étapes associées. La mémoire non transitoire peut être agencée en communication avec le processeur physique afin que le processeur physique, en cours d'utilisation, lise et exécute les instructions de code spécifiques incorporées dans la mémoire non transitoire. L'interface de l'ordinateur à usage spécifique peut être agencée en communication avec le processeur physique et recevoir des paramètres d'entrée qui sont traités par le processeur physique.

L'homme du métier comprendra que les agencements et procédés décrits ici représentent une solution au problème technologique décrit ci-dessus.

### DÉFINITIONS DES ACRONYMES ET ABREVIATIONS

- BDM :: Big Data Management
- CIS :: Cloud Industrial Supervision
- FDR :: Factory Data Repository
- HMI :: Human-Machine Interface
- MBE :: Modbus Ethernet
- NIC :: Network Interface Card
- SCADA :: Supervisory, Control And Data Acquisition
- SBS :: CIS Smart Node Subsystem
- SNM :: Smart Node Mesh
- SRS :: Software Requirements Spécification
- VM :: Virtual Machine
- M2M :: Machine to Machine
- RTU :: Real Time Unit

### LISTE DES SIGNES DE REFERENCES

(1)
(2)
(3)
(4)
(5)
(6)

## Revendications

1. Réseau de Nœuds intelligents pour réseau (R) distribué selon un maillage adaptable aux applications industrielles, chaque nœud (Ni A, NiB, ..., NiC)) permettant, par le biais d'un middleware de communication GCOM, une communication bidirectionnelle (11) de proche en proche avec d'autres nœuds ou une plateforme (10) centrale de gestion de données de masse (Big Data Management) permettant l'acquisition, la gestion et la mémorisation d'un lac de données ou avec un nuage (12, Cloud) public ou privé, chaque nœud comportant une architecture matérielle informatique, ladite architecture fonctionnant sous un système d'exploitation et une pile logicielle (2, 3, 4, 5, 6) utilisant un langage orienté objet, le réseau étant **caractérisé en ce qu'** un ou plusieurs nœuds sont déployés à des niveaux d'agrégation différents dont au moins un (N5A, N10B, N15C) hors site usine, au moins un (N2A, N8B, N13C) près des automates procédés de l'usine, au moins un (N6B) dans la salle de conduite et au moins un (N7B, N12C) par nuage, l'exécution de ladite pile logicielle (2-6) sur l'architecture matérielle informatique (200) met en œuvre un ensemble de fonctionnalités, la communication interne au maillage et externe vers d'autres systèmes étant orientée message.

2. Réseau de Nœuds intelligents adaptable aux applications industrielles selon la revendication 1, **caractérisé en ce que** La communication interne au maillage de nœuds CIS et externe vers d'autres systèmes est basée sur une architecture orientée message contenant soit des données soit des éléments de logique.

3. Réseau de Nœuds intelligents adaptable aux applications industrielles selon la revendication 1, **caractérisé en ce que** les éléments de logique peuvent être spécifiés unitairement par le biais de la création de services dont la définition est transmise aux logiciels de chaque nœud intelligent (CIS Smart Nodes) par messages et en utilisant les modules OPSY pour la gestion des déploiements et REPOSI pour la gestion des dépôts logiciels ainsi que le module CNFG pour la gestion de la configuration.

4. Réseau de Nœuds intelligents adaptable aux applications industrielles selon la revendication 1, **caractérisé en ce que** chaque nœud du réseau comporte plusieurs sous-systèmes fonctionnels adaptés à l'agrégation du nœud dans le réseau.

5. Réseau de Nœuds intelligents selon la revendication 1, **caractérisé en ce que** les sous systèmes fonctionnels sont sélectionnés pour tous les nœuds parmi les modules suivants :
CNFG pour la gestion de la configuration de chaque nœud intelligent ;
OPSY pour la gestion des déploiements logiciels (par exemple pour les patches de sécurité, les évolutions et maintenance applicative) ;
REPOSI pour la gestion des dépôts logiciels ;
ITOP pour la gestion de l'interopérabilité avec les systèmes tiers ;
GCOM pour la gestion de la communication dans le maillage (middleware) ;
USRM pour la gestion utilisateurs et permissions.

6. Réseau de Nœuds intelligents selon la revendication 1, **caractérisé en ce que** les sous systèmes fonctionnels d'un nœud placé dans le voisinage des automates procédés d'une usine comportent : le sous-système LSVC pour la fonctionnalité de gestion des drivers et services techniques pour l'instrumentation industrielle.

7. Réseau de Nœuds intelligents selon la revendication 1, **caractérisé en ce que** le sous systèmes fonctionnels GUIF d'un nœud déployé depuis la plateforme centrale permet de réaliser des modules de visualisation web locaux à un atelier donné du procédé défini par le nœud à proximité de l'atelier identifié dans le message.

8. Réseau de Nœuds intelligents (1) selon la revendication 1, **caractérisé en ce que** les sous systèmes fonctionnels d'au moins un nœud intermédiaire entre le nœud voisin des automates et le nœud voisin du nuage comportent le module est constitué par HSVC pour la gestion du pré-processing et des calculs locaux sur les résultats ou données usine.

9. Réseau de Nœuds intelligents (1) selon la revendication 1, **caractérisé en ce que** les sous systèmes fonctionnels d'au moins un nœud échangeant avec des nœuds disposés dans d'autres pays, comportent le module UTLY pour la gestion des utilitaires comme par exemple la gestion multi-langue.

10. Réseau de Nœuds intelligents selon la revendication 1 **caractérisé en ce qu'**il comporte au moins une des fonctionnalités suivantes :
création et gestion, pour lui-même ou les autres nœuds du maillage, d'objets adaptés à des processus industriels de façon à superviser et à contrôler tout type de processus, l'ensemble des objets définis pour l'ensemble du maillage et connu de chacun des nœuds étant dénommé « dictionnaire objet » ;
déploiement de plusieurs nœuds en maillage distribué par effet de voisinage ;
démarrage et communication de chaque nœud via le module de communication, dans son voisinage immédiat grâce à une configuration en usine avec un éventail minimal de fonctionnalités ;
mémorisation et gestion d'au moins un objet par chaque nœud pour le maintien de l'état actuel de l'objet et utilisant une liste mémorisée de voisinages des nœuds auxquels il est lui-même relié, pour informer chaque nœud voisin de l'éventuel changement d'état de l'objet ;
association, au module de communication de chaque nœud, d'un identifiant propre au nœud et d'un identifiant de voisinage, pour rendre chaque nœud iso-fonctionnel et apte à recevoir un ordre d'exécution en provenance d'un programme d'un autre nœud du maillage ;

11. Réseau de Nœuds intelligents (1) selon la revendication 1, **caractérisé en ce que** la diffusion systématique de données ou de commandes se fait par configuration du module de diffusion du nœud [Smart Node], ce module de diffusion étant initialement configuré pour mettre en œuvre, par exécution sur l'architecture matérielle informatique, une fonctionnalité de diffusion, au sein du réseau (8), d'une variable ou d'un groupe donné de variables avec une résolution donnée et jusqu'à une profondeur donnée dans le maillage, par exemple 3 ou 4 niveaux de voisinages.

12. Réseau de Nœuds intelligents (1) selon la revendication 1, **caractérisé en ce qu'**il comporte un module gestionnaire de nœud gérant les fonctionnalités mises en œuvre par les modules logiciels, exécutes sur l'architecture matérielle informatique, en surveillant et en contrôlant le redémarrage et les mises à jour de sécurité d'un module logiciel qui viendrait à s'interrompre ou mourir.

13. Réseau de Nœuds intelligents (1) selon la revendication 1, **caractérisé en ce que** chaque objet appartient à au moins une classe qui est une description des caractéristiques d'un ou de plusieurs objets représentatifs d'un processus industriel ou d'une caractéristique métier, chaque objet étant créé à partir de cette classe et constituant une instance de la classe en question, les caractéristiques et l'état d'un objet étant manipulés par des méthodes incorporées dans le nœud intelligent l'état d'un objet correspondant aux informations mémorisées à un instant donné, telles que décrites par les valeurs de l'ensemble de ses propriétés, aussi nommées champs ou attributs.

14. Réseau de Nœuds intelligents (1) selon la revendication 1, **caractérisé en ce que** chaque nœud comporte au moins une couche logicielle, ladite couche logicielle mettant en œuvre, par exécution sur l'architecture matérielle informatique, une fonctionnalité de mémorisation, en plus des informations en provenance des capteurs de processus, d'un attribut indiquant que le nœud concerné est un parent de l'objet appelé « nœud parent ».

15. Réseau de Nœuds intelligents selon la revendication 1, caractérisé en ce chaque nœud comporte un dispositif comprenant au moins une couche logicielle, ladite couche logicielle mettant en œuvre, par exécution sur l'architecture matérielle informatique, une fonctionnalité pour informer chaque nœud de son voisinage de façon que les nœuds (voisins informent les autres nœuds suivant un cheminement orienté dans une direction qui dépend de la topologie ou architecture propre du maillage, définissant les liaisons entre les nœuds du réseau, et au besoin suivant un cheminement orienté vers une plateforme (10) centrale ou vers les processus, chaque nœud informant ainsi le reste du maillage et chaque nœud (1) mémorisant ainsi l'objet, son état actuel et le nœud parent auquel l'objet est assigné.

16. Réseau de Nœuds intelligents (1) selon une des revendications précédentes, **caractérises en ce que** lesdites fonctionnalités mises en œuvre par le nœud (1) comporte également la diffusion, sous forme de séries temporelles, des données collectées ou calculées par chaque nœud (1), ladite diffusion étant réalisée par l'utilisation d'au moins l'un des deux modes de diffusion de données suivants: un mode de diffusion dit systématique dans lequel les données sont diffusées avec une résolution donnée et jusqu'à une profondeur donnée dans le maillage et, un mode de diffusion dite opportuniste dans laquelle au moins un nœud (1) voisin d'un autre nœud (1) concerné par une requête initiale donnée, enregistre de manière autonome l'information ou la donnée qui transite par lui sur sa mémoire afin de rediffuser ladite donnée ou information lorsqu'une requête similaire à la requête initiale est à nouveau posée, le pattern ou schéma de diffusion de données diffusées par les nœuds (1) étant diffèrent d'un schéma de réplication systématique dans lequel le schéma de diffusion de données est dupliqué à l'identique pour tous les nœuds.

17. Réseau de Nœuds intelligents (1) selon une des revendications précédentes, **caractérises en ce que** chaque nœud (1) est configuré pour mettre en œuvre une fonctionnalité, prévue, d'historisation systématique des données, mais également le stockage des actions qui se déroulent périodiquement ou des actions relatives au mode de diffusion dit opportuniste dans sa mémoire, chaque nœud (1) ayant ainsi la capacité de se comporter de manière autonome pour l'historisation des données recueillies lors des actions se déroulant périodiquement ou des actions relatives au mode de diffusion dit opportunistes.

18. Réseau de Nœuds intelligents (1) selon une des précédentes, **caractérisé en ce que** chaque nœud (1) du maillage ou une plateforme (10) centrale comporte un dispositif comprenant au moins une couche logicielle , ladite couche logicielle mettant en œuvre, par exécution sur l'architecture matérielle informatique, les fonctionnalités de création et de gestion, pour lui-même ou elle-même ou les autres nœuds du maillage, d'objets adaptés à des processus industriels de façon à contrôler tout type de processus, l'ensemble des objets définis pour l'ensemble du maillage et connu de chacun des nœuds étant dénommé « dictionnaire objet ».

19. Réseau de Nœuds intelligents (1) selon une des revendications précédentes, **caractérisé en ce que** chaque nœud (1) dispose au moins d'une interface d'accès à une image du « dictionnaire objet », cette interface étant configurée pour définir un nouveau nœud ou un nouvel objet pour un nœud, la requête en modification étant diffusée dans le maillage et transmise d'un nœud à un autre jusqu' au nœud parent concerné si la modification apportée au dictionnaire ne porte pas sur le nœud depuis lequel le gestionnaire (12) est accédé, le nœud parent de l'objet procédant alors, à l'exécution de la requête, le résultat de l'exécution étant ensuite diffusé à son tour dans le reste du maillage, chaque nœud recevant ce résultat mettant ensuite à jour sa propre image du « dictionnaire objet ».

20. Réseau de Nœuds intelligents (1) selon une des revendications précédentes, **caractérisé en ce que** lesdites fonctionnalités mises en œuvre par chaque nœud intelligent comporte la rediffusion, via son module de diffusion, au reste du maillage et à des intervalles de temps configurables l'état de ses propres objets, afin de pallier à toute rupture temporaire ou persistante de communication dans le maillage, cette capacité permettant au maillage de rétablir au besoin, l'intégrité des différentes images, associées aux différents nœuds du maillage, du « dictionnaire objet ».

21. Réseau de Nœuds intelligents (1) selon une des revendications précédentes, **caractérisé en ce que** les objets sont manipulés sans que les modifications apportées à l'état d'un objet ne fassent appel à l'état d'un autre objet ni n'influencent celui-ci, chaque objet ayant une autorisation d'accès pour toute utilisation ou toute entité du processus industriel, les attributs ou champs de définition des objets étant changés dynamiquement par le gestionnaire de noeud.

22. Réseau de Nœuds intelligents (1) selon une des revendications précédentes, **caractérisé en ce que** chaque objet utilise une méthode qui définit un paramètre qualité qui lui est associé, ledit paramètre qualité représentant l'écart entre une valeur cible désirée de l'état d'un objet et l'état réel de la valeur.

23. Réseau de Nœuds intelligents selon une des revendications précédentes, **caractérisé en ce que** chaque nœud du maillage ou la plateforme centrale (10) comporte un dispositif comprenant au moins une couche logicielle, ladite couche logicielle mettant en œuvre, par exécution sur une architecture matérielle informatique, une fonctionnalité de connexion à n'importe quel nœud du maillage, par envoi de l'identifiant du nœud à modifier, de façon à modifier à distance et dynamiquement le nœud concerné même si l'utilisateur est connecté à un nœud qui n'est pas le nœud parent de l'objet qu'il veut modifier.
